(19) Europäisches Patentamt
European Patent Office
Office européen des brevets

(11) **EP 1 045 755 B1**

(12) **FASCICULE DE BREVET EUROPEEN**

(45) Date de publication et mention
de la délivrance du brevet:
**05.03.2003 Bulletin 2003/10**

(51) Int Cl.⁷: **B29D 30/08**

(86) Numéro de dépôt international:
**PCT/FR98/02600**

(21) Numéro de dépôt: **98958309.1**

(22) Date de dépôt: **02.12.1998**

(87) Numéro de publication internationale:
**WO 99/029495 (17.06.1999 Gazette 1999/24)**

(54) **PNEUMATIQUE MUNI D'UNE BOUCLE CONDUCTRICE ET PROCEDE D'IMPLANTATION DE CETTE BOUCLE SOUS SA BANDE DE ROULEMENT**

LUFTREIFEN MIT EINER INTEGRIERTEN LEITERSCHLEIFE UND VERFAHREN ZUM EINBETTEN DIESER LEITERSCHLEIFE UNTER SEINE LAUFFLÄCHE

TYRE PROVIDED WITH A CONDUCTIVE LOOP AND METHOD FOR IMPLANTING SAID LOOP UNDER THE TYRE TREAD

(84) Etats contractants désignés:
**DE FR GB IT**

(30) Priorité: **08.12.1997 FR 9715491**

(43) Date de publication de la demande:
**25.10.2000 Bulletin 2000/43**

(73) Titulaire: **THALES SYSTEMES AEROPORTES S.A.**
**78990 Elancourt (FR)**

(72) Inventeurs:
• **MORAND, Jean**
**F-75116 Paris (FR)**
• **DE LIGNY, Paul**
**F-78960 Voisins le Bretonneux (FR)**

(74) Mandataire: **Plaçais, Jean-Yves et al**
**Cabinet Netter,**
**36, avenue Hoche**
**75008 Paris (FR)**

(56) Documents cités:
**WO-A-90/12474          WO-A-97/06968**
**DE-A- 2 524 463        DE-A- 3 416 747**
**DE-A- 19 648 318       US-A- 4 277 296**
**US-A- 4 319 220        US-A- 5 181 975**

• **"PIEZOELECTRIC POWERED (BATTERYLESS) RADIO FREQUENCY IDENTIFICATION TAG FOR TIRES" IBM TECHNICAL DISCLOSURE BULLETIN, vol. 39, no. 8, août 1996, page 245/246 XP000638201**

**Description**

L'invention concerne un pneumatique muni d'une boucle conductrice, et un procédé d'implantation d'une telle boucle, comme par exemple une boucle d'induction d'un dispositif de surveillance en service du pneumatique.

La Demanderesse a déjà proposé un pneumatique muni, au voisinage de sa bande de roulement, d'un capteur miniature qui détecte l'accélération radiale de la roue. Deux boucles montées l'une sur le pneumatique et l'autre sur le véhicule permettent le transfert de l'information obtenue vers le véhicule. Une autre boucle au moins, montée sur le véhicule permet l'alimentation électrique du capteur et/ou du montage électronique qui l'accompagne dans le pneumatique.

Pour la réalisation des boucles, il faut tenir compte d'impératifs liés aux techniques de fabrication actuelles des pneumatiques, en particulier à carcasse radiale, dont on connaît la complexité. En pratique, le procédé de fabrication d'un tel pneumatique comprend notamment une étape d'étirement de sa **carcasse**, et une étape ultérieure de traitement par vulcanisation pour sa mise en forme définitive. C'est ainsi qu'une boucle conductrice, telle que décrite dans la demande de brevet précitée, est implantée sous la bande de roulement du pneumatique, entre ces deux étapes. Le procédé de fabrication d'un tel pneumatique nécessite donc une étape supplémentaire de fixation de cette boucle, ce qui peut s'avérer indésirable dans le cadre d'une fabrication en grande série.

La présente invention vient améliorer la situation.

Elle propose à cet effet un procédé de fabrication d'un pneumatique dans lequel la boucle conductrice est implantée avant l'étape d'étirement de la **carcasse**.

L'invention part alors d'un procédé comportant les étapes suivantes :

    i - préparer une préforme déformable de la **carcasse**,
    ii - maintenir cette préforme enroulée sur un support de conformation générale circulaire,
    iii - poursuivre la fabrication du pneumatique, de manière connue en soi, avec un étirement de la préforme ainsi maintenue, dans une direction générale vers l'extérieur, **après** solidarisation de ses extrémités libres.

Selon l'invention, l'étape i) comprend en outre la préparation d'une préforme complémentaire comprenant un support élastique, de forme générale rectangulaire, homologue de celle de la préforme. Ce support élastique est muni d'au moins un conducteur fixé de manière lâche, également selon une forme générale rectangulaire.

Ensuite, l'étape ii) comprend le maintien de cette préforme complémentaire **et de** la préforme précitée, **sur le support de conformation générale circulaire**.

Ainsi, le procédé selon l'invention permet d'implanter au moins une boucle ou bobine conductrice à l'intérieur du pneumatique sans modification majeure de ses techniques de fabrication.

Ce procédé s'adapte aussi bien à la fabrication d'un pneumatique à carcasse radiale, l'étape i) comprenant la préparation d'une préforme déformable d'une nappe de carcasse radiale. La préforme complémentaire est alors maintenue, au cours de l'étape ii), préférentiellement entre les deux préformes respectives de la nappe de carcasse radiale et d'une couche d'étanchéité du pneumatique.

L'invention vise aussi un pneumatique fabriqué suivant ce procédé.

Selon l'invention, le pneumatique comprend alors, fixée sous sa bande de roulement, au moins une boucle ou bobine conduc trice qui présente, déroulée à plat, une forme générale rectangulaire. Le petit côté et le grand côté du rectangle s'étendent sensiblement sur la largeur du pneumatique et sensiblement tout le long de sa périphérie, respectivement.

D'autres caractéristiques et avantages de l'invention apparaîtront à l'examen de la description détaillée ci-après, et des dessins annexés sur lesquels :

- la figure 1 représente schématiquement le pneumatique 1 selon l'invention muni de boucles conductrices B1 et B3 d'un dispositif de surveillance en service de l'état du pneumatique, dans l'exemple décrit,

- la figure 2 représente la préforme complémentaire comportant le support élastique S et la boucle conductrice B1, disposée entre les préformes respectives de la nappe de carcasse radiale 3 et de la couche d'étanchéité 4,

- la figure 3a représente schématiquement les dispositions respectives de la boucle B1 et de la boucle B2, coopérant entre elles, dans une vue de face,

- la figure 3b est une vue de dessus des éléments de la figure 3a,

- la figure 4 est une vue de dessus de la boucle B1, déroulée à plat, sur son support S,

- la figure 5 est une vue suivant la coupe V-V de la figure 3a, faisant apparaître une partie des lignes de champ qui traversent les boucles B1 et B2, et

- la figure 6 représente le schéma électrique équivalent du couplage entre les deux boucles B1 et B2.

Les dessins contiennent, pour l'essentiel, des éléments de caractère certain. Ils pourront donc non seulement servir à mieux faire comprendre la description, mais aussi contribuer à la définition de l'invention, le cas échéant.

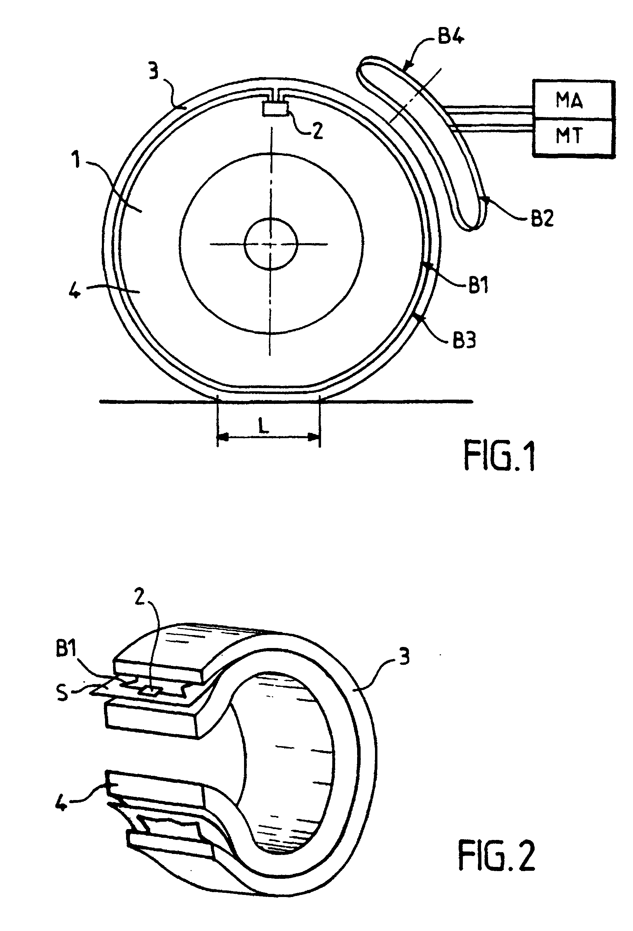

On se réfère tout d'abord à la figure 1 sur laquelle apparaît un pneumatique 1 à carcasse radiale 3, monté sur la roue d'un véhicule automobile dans l'exemple décrit, et muni d'une couche d'étanchéité 4. Le pneumatique 1 est équipé d'une première boucle conductrice B1 connectée à un élément actif.

L'élément actif comporte un capteur miniature 2 implanté sous la nappe de carcasse radiale 3, à proximité de la bande de roulement. Ce capteur est agencé pour être sensible à l'accélération radiale qu'induit la rotation du pneumatique

1. Ainsi, lorsqu'une partie de la bande de roulement avoisi nant le capteur 2, est en contact avec le sol, cette partie s'aplatit et le capteur 2 adopte un mouvement rectiligne. Ce dernier détecte alors une variation brusque - en particulier, une diminution - de l'accélération radiale qu'il subit, pendant le parcours d'une distance L (figure 1) représentative de l'état du pneumatique.

Le capteur peut comporter par exemple un matériau piézoélectrique sensible à la pression qu'exerce sur lui une masse m soumise à la force centrifuge. Cette pression s'écrit alors ;

$$P = (m \, V^2) / (R \, S) \, ,$$

où m est la masse qui subit l'accélération ; V la vitesse tangentielle de la roue ; R le rayon de la roue et S la surface de contact entre la masse m et le matériau piézoélectrique.

On repère ainsi les intervalles de temps pendant lesquels l'accélération radiale s'annule, ainsi que leurs durées, représentatives de l'état du pneumatique. Lorsque le capteur 2 est loin du sol, le matériau piézoélectrique délivre un courant non nul. Cette information que donne le capteur doit être recueillie et mise en forme par des moyens de traitement MT.

Ces moyens de traitement comportent notamment une mémoire et un circuit électronique propre à mettre en forme une partie au moins des mesures que donne le capteur, et apte à inscrire dans la mémoire des données relatives à ces mesures.

Cependant, de tels moyens de traitement ne peuvent être totalement incorporés dans le pneumatique 1. Le capteur 2 est alors connecté à une première boucle conductrice B1 apte à coopérer par couplage électromagnétique avec une seconde boucle B2 (entrée-sortie de données), laquelle est connectée à une partie des moyens de traitement MT. En pratique, la mémoire, non volatile (EEPROM) dans l'exemple, est embarquée dans le pneumatique, à proximité du capteur 2, et connectée à celui-ci.

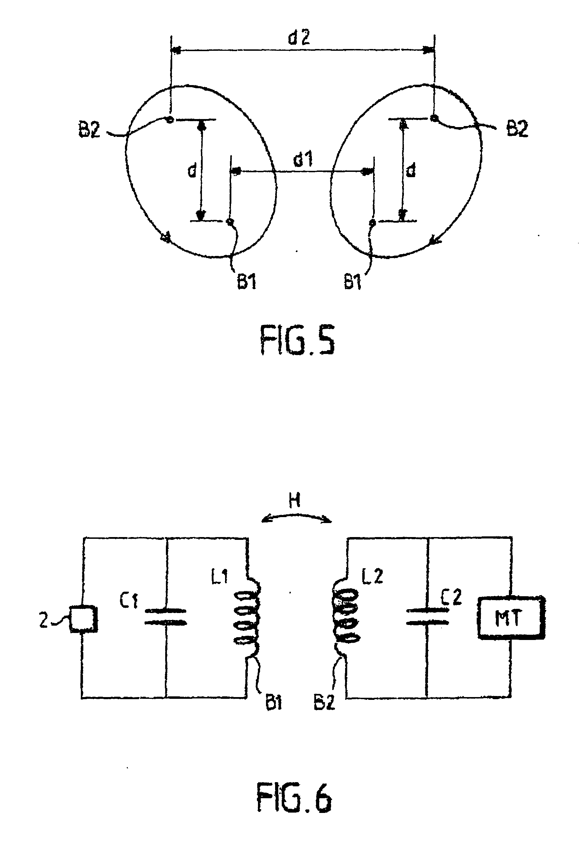

Un flux magnétique est transmis de la première boucle d'induction B1 à la seconde boucle d'induction B2. Pour améliorer le couplage entre les boucles d'induction B1 et B2, elles sont chacune connectées à un condensateur C1 et C2 (figure 6) de manière à les accorder sur une bande de fréquences voisines d'une fréquence centrale $w_1$. Dans ce cas, les relations suivantes sont obtenues :

$$L1.C1 \approx L2.C2 \approx 1 \, / W_1^{\,2} \, ,$$

où L1 et L2 sont les inductances des boucles B1 et B2, et C1 et C2 sont les capacités de condensateurs miniatures, connectés à ces boucles, respectivement.

L'élément actif comporte par ailleurs un circuit électronique ou électrique d'amplification du courant émis par le capteur 2. Ce circuit nécessite une alimentation notamment électrique. La solution qui consisterait à implanter une pile embarquée dans le pneumatique est difficilement envisageable, compte tenu du traitement à haute température (T≈180°C) que subit celui-ci pour polymériser les matériaux qu'il contient, après l'étape d'étirement. Il est à noter par contre que la Demanderesse a vérifié que les composants embarqués avec la boucle B1 tels que le capteur 2 ou le condensateur miniature C1, résistent à ce traitement.

Selon un mode de réalisation plus élaboré de l'invention, le pneumatique 1 peut être équipé d'une troisième boucle conductrice B3 propre à coopérer, par couplage électromagné tique, avec une boucle homologue B4 disposée à l'extérieur du pneumatique et connectée à des moyens d'alimentation externes MA. Une plus grande autonomie est ainsi procurée au circuit d'amplification de l'élément actif. Les boucles B3 et B4 sont chacune connectées à un condensateur de capacité choisie de sorte que les boucles B3 et B4 soient accordées sur une bande de fréquences différentes de $w_1$, ce qui permet de limiter les perturbations normalement induites sur le couplage entre les boucles B1 et B2. L'énergie magnétique émise par la boucle B4 est récupérée sous forme de courant électrique i, circulant dans la boucle B3. Le capteur 2 et son électronique de traitement possèdent une impédance propre z, et peuvent ainsi être alimentés en tension électrique V≈z*i.

Les boucles conductrices sont implantées dans le pneumatique, entre la nappe de carcasse radiale 3 et la couche d'étanchéité 4 (figure 2). Au cours de l'étape i) précitée, on prépare alors une préforme comportant un support élastique S sur lequel est fixé un conducteur conformé pour présenter une forme générale de boucle ouverte rectangulaire. En pratique, la boucle conductrice est immobilisée entre deux couches d'élastomère, préférentiellement en caoutchouc chargé. Cette étape peut comprendre en outre la fixation sur le support élastique d'une autre boucle B3 (pour l'alimentation du circuit d'amplification), homologue de cette boucle ouverte B1.

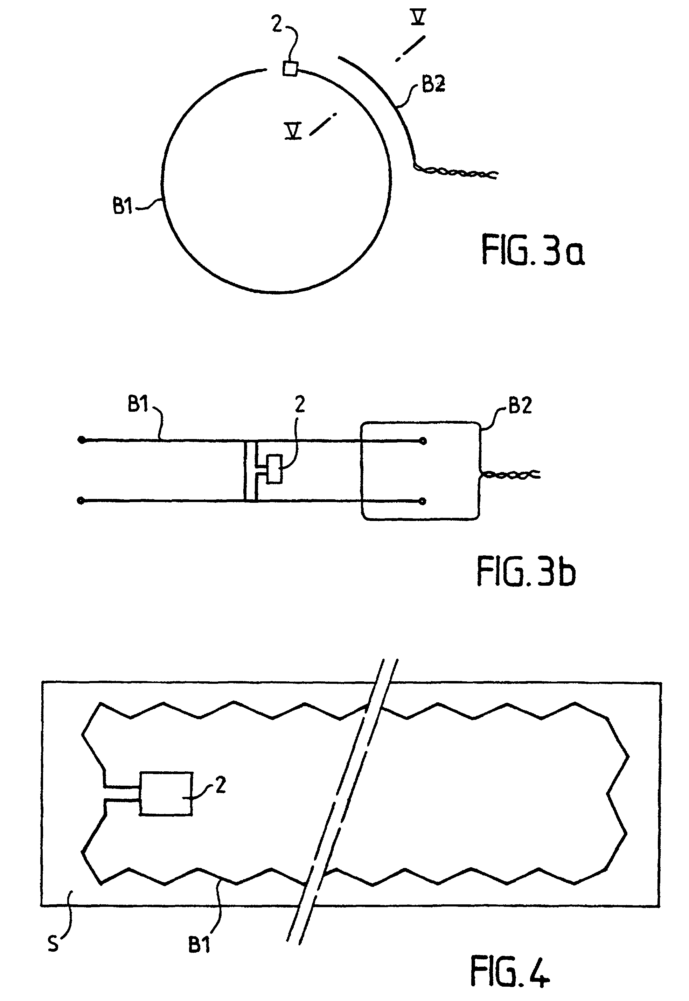

Les deux boucles sont fixées sur le support par une technique du genre surfilage ou faufilage, l'essentiel étant qu'elles soient fixées de manière lâche pour supporter l'étirement des préformes au cours de l'étape iii). Typiquement, le diamètre du pneumatique atteint jusqu'à 150% de sa valeur initiale après cette étape d'étirement. Ces boucles sont alors conformées pour présenter au départ, des lignes sensiblement en zigzag, à plat (figure 4). Elles comportent de préférence des fils isolés, qui peuvent être des fils dits de Litz (connus dans les bobinages des postes radio à modulation d'amplitude, ondes longues et/ou moyennes). Les extrémités de chaque boucle (petits côtés du rectangle) sont joints au cours de l'étape ii) pour être sensiblement adjacents. Ainsi, les effets d'induction s'annulent aux extrémités.

On peut prévoir de laisser apparentes les deux extrémités libres de chaque boucle pour connecter celles-ci à un élément actif, et chacune à au moins un condensateur miniature pour améliorer le couplage, après l'une des étapes ii) et iii).

Préférentiellement, ces connexions sont effectuées au cours de l'étape i) de manière à implanter l'élément actif sous la préforme de la nappe de carcasse radiale au cours de l'étape ii).

En pratique, la boucle B1 se présente sous la forme d'une bobine comportant une dizaine de spires. Le capteur 2 et le condensateur miniature C1 sont réalisés par technologie intégrée, et possèdent sensiblement la même épaisseur que la boucle B1 (environ 2 mm), de façon à se loger dans le pneumatique sans surépaisseur locale, la différence d'épaisseur étant compensée par une couche d'enrobage du pneumatique (d'environ 1 mm de chaque côté de la bande de support S).

Selon l'invention, les deux boucles présentent à plat une forme sensiblement rectangulaire, le petit côté et le grand côté du rectangle s'étendant sensiblement sur la largeur du pneumatique et le long de sa périphérie, respectivement.

Pour optimiser le couplage entre les boucles B1 et B2 d'une part et B3 et B4 d'autre part, les boucles B2 et B4 disposées à l'extérieur du pneumatique présentent aussi une forme sensiblement rectangulaire. Dans la demande de brevet français citée en introduction, les boucles B2 et B4 du dispositif de surveillance, étaient disposées dans un plan perpendiculaire au "plan" des boucles B1 et B3 (plan de la figure 3b). Le couplage électromagnétique entre les boucles est, dans un tel montage, particulièrement sensible aux débattements de la suspension. Dans le mode de réalisation que propose la présente demande, les boucles B2 et B4 sont disposées sur un passage de roue du véhicule (ou garde-boue) à proximité des boucles B1 et B3. Le grand côté du rectangle qu'elles forment à plat s'étend sur un arc de cercle concentrique avec la carcasse radiale 3 du pneumatique. Ainsi, la distance d entre les boucles disposées dans le pneumatique et sur le véhicule est sensiblement constante au repos (figure 3a).

Cette distance peut varier cependant en fonction des débattements de la suspension. La Demanderesse a prévu en conséquence des largeurs de boucles de même ordre de grandeur que la distance d ; un léger écart à cette distance n'engendre pas une variation notable du flux magnétique transmis entre les boucles.

Par ailleurs, les boucles montées sur le véhicule sont légèrement plus larges que celles implantées dans le pneumatique. Ainsi, les lignes de champs H (figure 5) peuvent parcourir l'intérieur des boucles sans que la transmission du flux magnétique ne soit perturbée par un éventuel angle de virage que prendrait la roue par rapport à l'axe du véhicule.

Typiquement, les pertes de couplage entre les boucles atteignent, dans l'exemple décrit, environ 20dB, tandis qu'elles étaient autour de 30dB dans la configuration décrite dans la demande de brevet précitée.

Bien entendu, l'invention n'est pas limitée à la forme de réalisation décrite précédemment à titre d'exemple, elle s'étend à d'autres variantes.

Ainsi, on comprendra que le pneumatique selon l'invention peut ne comporter qu'une seule boucle d'induction B1 permettant de relier l'élément actif à des moyens de traitement MT, ainsi qu'à des moyens d'alimentation MA. Dans ce cas, la boucle B1 peut coopérer avec la boucle d'alimentation B4 sur une bande de fréquences voisines de $w_1$ (typiquement 40kHz). Par modulation de la porteuse de retour, la boucle B1 peut coopérer avec la boucle B2 reliée aux moyens de traitement MT, sur une bande de fréquences voisines d'une fréquence $w_2$, multiple de la fréquence $w_1$ (par exemple $w_2=80kHz$).

Dans la configuration décrite dans l'exemple, les boucles sont implantées sous la nappe de carcasse radiale, ce qui laisse supposer que la structure métallique de la carcasse puisse induire des perturbations sur les flux transmis. Cependant, la Demanderesse a observé que les pertes de couplage n'augmentent pas significativement dans la configuration décrite.

De façon générale, l'invention permet une communication électrique (au sens large), jusqu'à l'alimentation entre un pneumatique et le châssis d'un véhicule. Elle trouve une application particulière à la détection de l'état d'un pneumatique par mesure de l'accélération. Elle est susceptible de nombreuses variantes, notamment en ce qui concerne les données transmises et la grandeur physique qui sert à détecter l'état du pneumatique.

## Revendications

1. Procédé de fabrication d'un pneumatique (1), du type comportant les étapes suivantes:

   i - préparer une préforme déformable de la carcasse (3),

   ii - maintenir cette préforme enroulée sur un support de conformation générale circulaire,

iii - poursuivre la fabrication du pneumatique, de manière connue en soi, avec un étirement de la préforme ainsi maintenue, dans une direction générale vers l'extérieur, ledit étirement étant effectué après solidarisation des extrémités libres de la préforme,

**caractérisé en ce que** :

- l'étape i) comprend en outre la préparation d'une préforme complémentaire comprenant un support élastique (S), de forme générale rectangulaire, homologue de celle de ladite préforme, muni d'au moins un conducteur (B1) fixé de manière lâche, également selon une forme générale rectangulaire, et
- l'étape ii) comprend le maintien de cette préforme complémentaire avec la préforme précitée, sur le support de conformation générale circulaire,

   ce qui permet d'implanter une boucle conductrice (B1) à l'intérieur du pneumatique sans modification majeure de ses techniques de fabrication.

2. Procédé selon la revendication 1, dans lequel l'étape i) comprend en outre la préparation de préformes déformables d'une couche d'étanchéité (4) et d'une nappe de carcasse radiale (3) du pneumatique,
   **caractérisé en ce que** la préforme complémentaire est maintenue, au cours de l'étape ii), entre les deux préformes respectives de la nappe de carcasse radiale (3) et de la couche d'étanchéité (4).

3. Procédé selon l'une des revendications 1 et 2, **caractérisé en ce que** le conducteur est conformé au cours de l'étape i) pour présenter une forme générale de boucle ouverte rectangulaire (B1),

4. Procédé selon la revendication 3, **caractérisé en ce que** les deux petits côtés de la boucle rectangulaire (B1) sont joints au cours de l'étape ii) pour être sensiblement adjacents.

5. Procédé selon l'une des revendications 3 et 4, **caractérisé en ce que** l'étape i) comprend en outre la fixation sur le support élastique d'une autre boucle (B3), homologue de ladite boucle ouverte (B1).

6. Procédé selon la revendication 5, **caractérisé en ce que** les boucles (B1,B3) sont fixées sur le support élastique (S) par une technique du genre surfilage ou faufilage.

7. Procédé selon l'une des revendications 5 et 6, **caractérisé en ce que** l'étape i) comprend en outre les connexions des boucles à un élément actif, et chacune à au moins un composant électrique (C1).

8. Procédé selon la revendication 7, **caractérisé en ce que** l'étape ii) comprend en outre l'implantation dudit élément actif sous la préforme de la carcasse (3).

9. Procédé selon l'une des revendications 5 et 6, **caractérisé en ce que** l'on prévoit de laisser apparentes les deux extrémités libres de chaque boucle pour connecter celles-ci à un élément actif, et chacune à au moins un composant électrique (C1) après l'une des étapes ii) et iii).

10. Pneumatique, **caractérisé en ce qu'**il comprend, fixée sous sa bande de roulement, au moins une boucle conductrice (B1) qui présente, déroulée à plat, une forme générale rectangulaire, le petit côté et le grand côté du rectangle s'étendant sensiblement sur la largeur du pneumatique et sensiblement tout le long de sa périphérie, respectivement.

11. Pneumatique selon la revendication 10, **caractérisé en ce que** sa boucle (B1) est agencée pour être apte à coopérer par couplage électromagnétique avec au moins une boucle (B2), accordée en fréquence (w), et disposée au voisinage externe de la périphérie du pneumatique.

12. Pneumatique selon la revendication 11, **caractérisé en ce qu'**il comporte en outre un élément actif implanté sous la bande de roulement, et connecté à la boucle précitée (B1) de sorte qu'il soit apte à transmettre des informations relatives à l'état du pneumatique.

13. Pneumatique selon l'une des revendications 10 à 12, **caractérisé en ce qu'**il comporte une autre boucle conductrice (B3), propre à délivrer une énergie notamment électrique pour alimenter un élément actif, implanté sous la bande de roulement.

14. Pneumatique selon l'une des revendications 12 et 13, **caractérisé en ce que** l'élément actif comporte un capteur miniature (2) disposé pour être sensible à l'accélération radiale du pneumatique.

15. Pneumatique selon l'une des revendications 12 à 14, **caractérisé en ce qu'**il comporte une mémoire embarquée, non volatile (EEPROM), et connectée à l'élément actif.

**Claims**

1. Process for manufacturing a tyre (1), of the type comprising the following steps:

i - preparing a deformable preform for the carcass (3),

ii - holding this preform wound on a support of circular general shape,

iii - continuing the manufacture of the tyre, in a manner known per se, with stretching of the preform thus held, in an outward general direction, the said stretching being carried out after the fastening of the free ends of the preform,

**characterized in that**:

- step i) furthermore includes the preparation of a complementary preform comprising an elastic support (S), of rectangular general shape, homologous with that of the said preform, provided with at least one conductor (B1) fixed in a loose manner, also with a rectangular general shape, and

- step ii) comprises holding this complementary preform with the aforementioned preform, on the support of circular general shape, thereby making it possible to implant a conductive loop (B1) inside the tyre without significantly modifying its manufacturing techniques.

2. Process according to Claim 1, in which step i) furthermore includes the preparation of deformable preforms for a sealing layer (4) and for a radial carcass ply (3) of the tyre, **characterized in that** the complementary preform is held, during step ii), between the two respective preforms for the radial carcass ply (3) and for the sealing layer (4).

3. Process according to either of Claims 1 and 2, **characterized in that** the conductor is shaped during step i) so as to have the general shape of a rectangular open loop (B1).

4. Process according to Claim 3, **characterized in that** the two short sides of the rectangular loop (B1) are joined during step ii) in order to be substantially adjacent.

5. Process according to either of Claims 3 and 4, **characterized in that** step i) furthermore includes the fixing of another loop (B3), homologous with the said open loop (B1), to the elastic support.

6. Process according to Claim 5, **characterized in that** the loops (B1, B3) are fixed to the elastic support (S) by a technique of the overcasting or tacking kind.

7. Process according to either of Claims 5 and 6, **characterized in that** step i) furthermore includes the connecting of the loops to an active element and each loop to at least one electrical component (C1).

8. Process according to Claim 7, **characterized in that** step ii) furthermore includes the implantation of the said active element under the preform for the carcass (3).

9. Process according to either of Claims 5 and 6, **characterized in that** provision is made to leave the two free ends of each loop visible in order to connect them to an active element, and each end to at least one electrical component (C1) after either of steps ii) and iii).

10. Tyre, **characterized in that** it comprises, fixed under its tread, at least one conductive loop (B1) which has, when opened out flat, a rectangular general shape, the short side and the long side of the rectangle extending substantially over the width of the tyre and substantially right along its periphery, respectively.

11. Tyre according to Claim 10, **characterized in that** its loop (B1) is designed to be able to interact by electromagnetic coupling with at least one loop (B2), tuned in terms of frequency (w), and placed in the external proximity of the periphery of the tyre.

12. Tyre according to Claim 11, **characterized in that** it furthermore includes an active element implanted under the tread and connected to the aforementioned loop (B1) so that it is capable of transmitting information relating to the state of the tyre.

13. Tyre according to one of Claims 10 to 12, **characterized in that** it includes another conductive loop (B3), suitable for delivering energy, especially electrical energy, for supplying an active element which is implanted under the tread.

14. Tyre according to either of Claims 12 and 13, **characterized in that** the active element includes a miniature sensor (2) placed so as to be sensitive to the radial acceleration of the tyre.

15. Tyre according to one of Claims 12 to 14, **characterized in that** it includes a nonvolatile onboard memory (EEPROM) connected to the active element.

**Patentansprüche**

1. Verfahren zur Herstellung eines Luftreifens (1), enthaltend die folgenden Schritte:

i - Vorbereiten eines verformbaren Karkassenvorformlings (3),

ii - Halten dieses Vorformlings in eingerolltem Zustand über einem Träger von in Wesentlichem kreisförmiger Gestalt,

iii - Fortsetzen der Herstellung des Luftreifens in an sich bekannter Art mit einer Ausdehnung des so gehalten Vorformlings in einer Richtung im Wesentlichen nach außen, wobei die Ausdehnung nach Verfestigung der freien Enden des Vorformlings ausgeführt wird,

**dadurch gekennzeichnet, dass**

- der Schritt i) weiterhin die Vorbereitung eines komplementären Vorformlings umfasst, der einen elastischen Träger (S) enthält, der eine im Wesentlichen rechteckige Form, homolog zu der dem erstgenannten Vorformling, aufweist und der wenigstens mit einem Leiter (B1) versehen ist, der entspannt angebracht ist und der ebenfalls in einer im Wesentlichen rechteckigen Form verläuft, und

- der Schritt ii) das Halten dieses komplementären Vorformlings mit dem erstgenannten Vorformling auf dem Träger von im Wesentlichen kreisförmiger Gestalt umfasst,

was es ermöglicht, in das Innere des Luftreifens eine Leiterschleife (B1) zu integrieren, ohne dessen Herstellungstechnik in wesentlichem Umfang zu verändern.

2. Verfahren nach Anspruch 1, bei dem der Schritt i) weiterhin die Vorbereitung von verformbaren Vorformlingen einer Dichtschicht (4) und einer Radialkordlage (3) des Reifens umfasst, **dadurch gekennzeichnet, dass** der komplementäre Vorformling im Verlaufe des Schrittes ii) zwischen den zwei Vorformenlingen der Radialkordlage (3) und der Dichtschicht (4) gehalten wird.

3. Verfahren nach einem der Ansprüche 1 und 2, **dadurch gekennzeichnet, dass** der Leiter im Verlaufe des Schrittes i) so angeglichen wird, dass er die allgemeine Form einer rechteckigen, offenen Schleife (B1) aufweist.

4. Verfahren nach Anspruch 3, **dadurch gekennzeichnet, dass** die zwei kurzen Seiten der rechteckigen Schleife (B1) im Verlaufe des Schrittes ii) nebeneinander gelegt werden, damit sie deutlich benachbart sind.

5. Verfahren nach einem der Ansprüche 3 und 4, **dadurch gekennzeichnet, dass** der Schritt i) weiterhin die Befestigung einer zur genannten offenen Schleife (B1) homologen weiteren Schleife (B3) auf dem elastischen Träger umfasst.

6. Verfahren nach Anspruch 5, **dadurch gekennzeichnet, dass** die Schleifen (B1, B3) auf dem elastischen Träger (S) durch eine Überkantstich- oder Heftstichtechnik befestigt werden.

7. Verfahren nach einem der Ansprüche 5 und 6, **dadurch gekennzeichnet, dass** der Schritt i) weiterhin die Verbindung der Schleifen mit einem aktiven Element, und jede mit wenigstens einem elektrischen Bauteil (C1), umfasst.

8. Verfahren nach Anspruch 7, **dadurch gekennzeichnet, dass** der Schritt ii) weiterhin die Integration des genannten aktiven Elements unter dem Karkassenvorformling (3) umfasst.

9. Verfahren nach einem der Ansprüche 5 und 6, **dadurch gekennzeichnet, dass** man die zwei freien Enden einer jeden Schleife sichtbar lässt, um sie mit einem aktiven Element, und jedes mit wenigstens einem elektrischen Bauteil (C1) nach einem der Schritte ii) und iii), zu verbinden.

10. Pneumatischer Reifen, **dadurch gekennzeichnet, dass** er unter seiner Lauffläche befestigt wenigstens eine Leiterschleife (B1) aufweist, die im abgewickelten Zustand eine im Wesentlichen rechteckige Gestalt hat, wobei sich die kurze Seite und die lange Seite des Rechtecks sich im Wesentlichen über die Breite bzw. im Wesentlichen über seine Umfangslänge erstrecken.

11. Pneumatischer Reifen nach Anspruch 10, **dadurch gekennzeichnet, dass** seine Schleife (B1) so gestaltet ist, dass sie dazu geeignet ist, durch elektromagnetische Kopplung mit wenigstens einer Schleife (B2) zusammenzuwirken, die in der Frequenz (w) abgestimmt ist und benachbart zum äußeren Umfang des pneumatischen Reifens angeordnet ist.

12. Pneumatischer Reifen nach Anspruch 11, **dadurch gekennzeichnet, dass** er weiterhin ein aktives Element enthält, das unter der Lauffläche integriert und mit der vorgenannten Schleife (B1) verbunden ist, um in der Lage zu sein, Informationen auszusenden, die sich auf den Zustand des pneumatischen Reifens beziehen.

13. Pneumatischer Reifen nach einem der Ansprüche 10 bis 12, **dadurch gekennzeichnet, dass** er eine weitere Leiterschleife (B3) enthält, die dazu eingerichtet ist, eine namentlich elektrische Energie zu liefern, um ein aktives Element zu versorgen, das unter der Lauffläche eingebettet ist.

14. Pneumatischer Reifen nach einem der Ansprüche 12 und 13, **dadurch gekennzeichnet, dass** das aktive Element einen Miniaturaufnehmer (2) enthält, der dazu eingerichtet ist, auf die Radialbeschleunigung des pneumatischen Reifens anzusprechen.

15. Pneumatischer Reifen nach einem der Ansprüche 12 bis 14, **dadurch gekennzeichnet, dass** er einen eingebauten, nicht-flüchtigen Speicher (EEPROM) enthält, der mit dem aktiven Element verbunden ist.

FIG.1

FIG.2

FIG. 3a

FIG. 3b

FIG. 4

FIG.5

FIG.6